# EUROPEAN PATENT SPECIFICATION

(11) **EP 1 851 106 B1**
(45) Date of publication and mention of the grant of the patent: **07.08.2013**
(21) Application number: 06728392.9
(22) Date of filing: 10.02.2006
(51) Int. Cl.: B63B 51/02, F21S 10/06, H01L 33/00, F21W 111/043

(54) **A LIGHTING DEVICE**
BELEUCHTUNGSVORRICHTUNG
DISPOSITIF D'ECLAIRAGE

(30) Priority: 10.02.2005 IN DE02932005
(43) Date of publication of application: 07.11.2007
(73) Proprietor: Instapower Ltd., New Delhi 110-017 (IN)
(72) Inventor: VAISH, Himangshu Rai, Instapower Ltd., New Delhi 110 017 (IN)
(74) Representative: Hinkelmann, Klaus
(86) International application number: PCT/IN2006/000046
(87) International publication number: WO 2006/085339

(56) References cited:
- EP-A2- 1 043 189
- WO-A-01/86606
- WO-A-03/079408
- AU-A4- 2003 100 418
- GB-A- 2 208 026
- JP-A- 2000 230 971
- US-A1- 2004 057 234
- US-A1- 2004 095 777
- US-A1- 2004 095 777
- US-B1- 6 700 502
- DATABASE WPI Week 200055 Thomson Scientific, London, GB; AN 2000-582252 XP002508377 & JP 2000 230971 A (AISIN AW KOGYO KK) 22 August 2000 (2000-08-22)

## Description

### Field of the Invention

The invention generally relates to a lighting device, more specifically to a lighting device for providing isometric rotating light beam of a high intensity from semiconductor lighting elements, like LEDs, whose light emission is directional in nature, that can be used in aviation industry, obstacle beacons etc., still more precisely the present invention relates to a semiconductor lighting device with capabilities of detecting failures in the device, according to the first part of claim 1.

### Background of the Invention

In many situations there is a need for providing a light beam, which may be flashing and can be viewed from many or all directions. For example, in aviation industry the visibility of the lighting devices placed on top of a high rising obstacle is expected to be independent of direction of observation. This is highly desirable to protect huge loss of life and property. Similarly lighthouses, buoys, etc. provide signals to ships in all directions and stages in auditoriums have high intensity lights, which move.

The existing technology for lighting devices mainly depends on the lighting elements like bulb or halogen etc., however, these lighting elements consume a large amount of power and are very expensive to maintain. The development of other lighting elements, like Light Emitting Diodes (LEDs), lasers, quantum dots, etc. have offered an alternate cost effective solution. However, the implementation of a lighting device using LEDs for the aforesaid task is difficult due to various constraints associated with the LEDs, like directional nature of light, and the demanding specifications and expectations from the lighting devices.

US 2004/0057234 A1 discloses a lighting device according to the first part of claim 1.

WO 03/079408 A discloses a lighting device comprising light-sources, a motor and a controller for controlling speed of rotation, intensity and operating conditions.

For applications like aviation and navigation, not only uniform visibility from all the directions is desired but also the intensity of light at various angles is required to be according to a predefined specification by International Organisations, like International Civil Aviation Organisation (ICAO). International Maritime Board, etc.

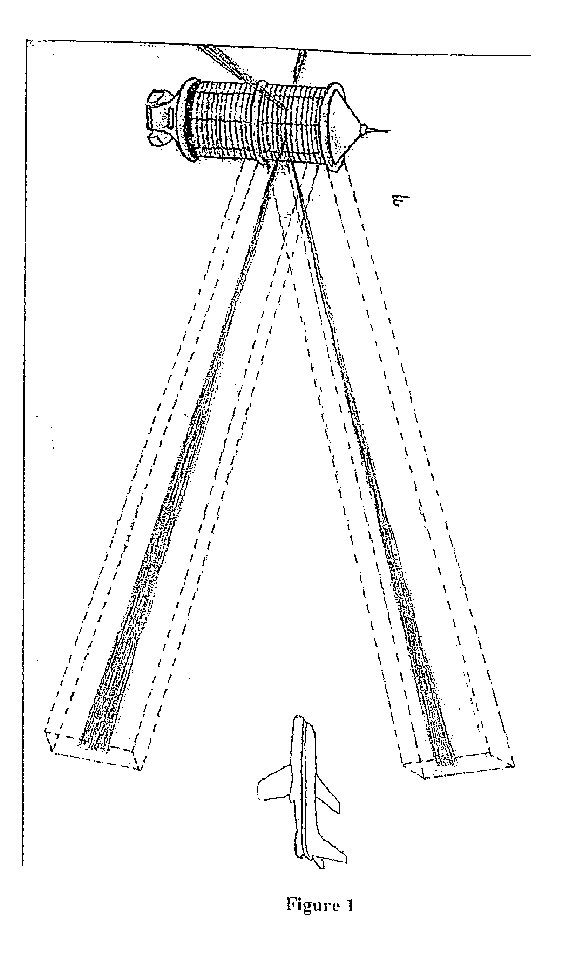

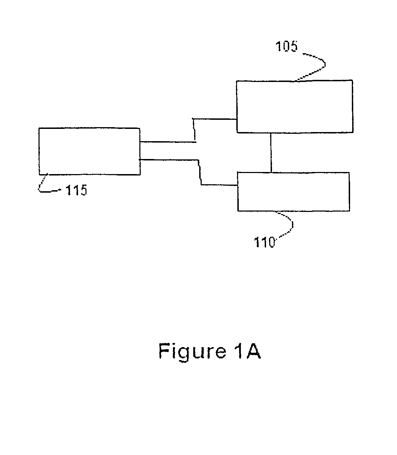

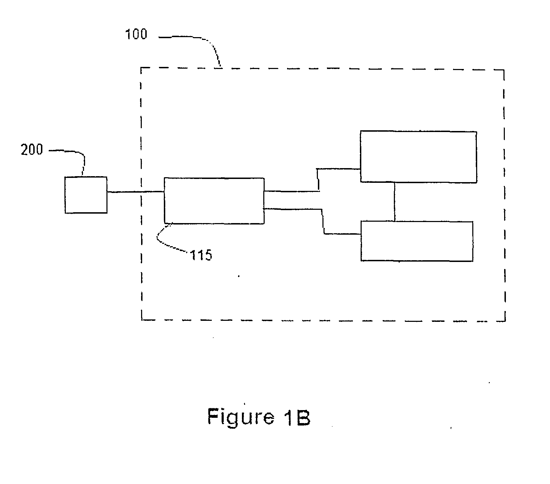

The existing technologies using LEDs are not able to meet the above-mentioned requirements simultaneously. For example, one of the lighting devices shown in figure 1 is normally used in the aviation industry. A hexagon structure having 6 panels of 200 LEDs fixed on each panel is shown. The LEDs project light in the respective direction. However, the light sources of this type not only require large number of LEDs to be placed which not only reduces the reliability of the circuitry but also they do not meet the requirement of uniform visibility from all the directions as it is apparent from figure 1, which shows a large dark area into which an aircraft is flying. Furthermore, the light intensity desired at long distances is also a subject of concern. In such lighting devices due to the light output required, a large number of LEDs have to be used, which not only consume more power but also increases the weight of the device and still does not meet the specifications for such devices in terms of intensity, viewing angle and all round visibility.

Therefore, it has been observed that there is a need of a device to avoid all above and other limitations. A lighting device, visible from all the directions, is required which has tunable light intensity and preset viewing angle. Further there is a need of a lighting device that uses few components to increase reliability providing a cost-effective, low power and lightweight solution. Since such light sources are installed in remote and sometimes not easily accessible places, the lighting device should be highly reliable and capable of giving alarms, local and/or distant, on sensing failure. Further, ease of operating such lights from solar energy is also desirable.

### Object and Summary of the Invention

It is an object of the invention to provide a light beam using semiconductor light sources, like LEDs that is visible from various angles and directions.

It is yet another object of the invention to provide a lighting device - that has tunable light intensity and a preset viewing angle.

It is yet a further object of the invention to provide a lighting device - that can detect partial failures within itself.

It is yet another object of the invention to provide a lighting source that can indicate failure and activate alarms before a complete failure takes place.

Still another object of the invention is to provide a lighting device, which can run directly with the help of a solar panel connected to a battery.

To achieve the aforementioned and other objects the present invention provides a lighting device according to claim 1. The light beam is rotated either by using a stationary light-source and rotating reflector or, stationary reflector and rotating light-source or, any combination thereof.

The semiconductor light-source includes one or more lighting elements. The lighting elements are LED(s) and/or, laser diodes and/or, quantum dots. These lighting elements are provided with a focusing arrangement for focusing the light in a direction and are mounted on a mount. This mount includes PCBs and metal plates, preferably an aluminum plate, for sinking heat. The intensity of the light generated by the elements ranges at least in the domain of 150-500,000 Candela.

The light-source can be provided with a reflector for reflecting the light beam generated by the light-source. Motor(s) is/are used to rotate the generated light beam(s) by rotating either the light-source and/or, a reflector or, any such combination. The rotation speed of the motor is adjustable and may be varied according to the requirements. At different rotating speeds the light beam simulates either a flashing or a continuous beam of light. Motor(s) and lighting-source(s) are covered in a covering. This covering can be a polycarbonate, it provides rigidity and water proofing to the device.

A controller is used to control operation of the lighting device. The controller is either a microprocessor and/or microcontroller and can be programmed from a remote location. Controller is coupled with motor and light-source to control the speed of rotation of the motor and the intensity of light in the lighting device. Controller is coupled to the light-source through semiconductor switch which can be a MOSFET or BJT etc. The controller is configured to monitor functioning of the light-source and maintain the light intensity at a desirable level. Controller is provided with a current sensor also. This current sensor monitors current through the light-source and helps in detecting partial and/or, full failure of the light-source/lighting elements. An audio and/or, visual indicator and/or, radio or, telecom equipment using land and/or, air and/or, satellite links is also coupled to the controller for failure indication. In case of failure of any lighting element(s), the controller distributes current flow in the remaining semiconductor light-source and/or, lighting element(s) to maintain desired intensity of light emitted from the source. For its effective working of the lighting device controller is further provided with sensors for sensing temperature, current through semiconductor light-source, motor failure, light intensity, the whole assembly being stationary or rotating, and other necessary operating condition.

This lighting device can be powered by non-conventional or conventional power supply. The conventional power supply can be an AC to DC and/or, DC to DC power supply. The light-source(s) of the lighting device are switched ON using a light dependent sensor, like solar panel, light dependent resistor, photo diode, etc. and/or, a timer.

This lighting device can be used for aviation, navigation, stage lighting or other purposes. It could consist of a light-source focused in one direction and rotating.

### Brief Description of the Accompanying Drawings

These and other aspects of the present invention will be apparent from the following detailed description when read in conjunction with the accompanying drawings in which like designations are used to designate substantially identical elements.
Figure **1** shows a prior art light source depicting one of the major drawbacks.
Figure **1A** depicts a block diagram of the present invention.
Figure **1B** depicts a block diagram of lighting device with a failure indicator.
Figure **2** shows a first view of the light source in accordance with the present invention.
Figure **3** shows a second view of the light source in accordance with present invention.
Figures **4** & **5** show respective top and side views of the light source, in accordance with the present invention.

### Detailed Description of the Invention

A further understanding of the present invention may be obtained with reference to the following description taken in conjunction with the accompanying drawings. However, the embodiments used for describing the invention are illustrative only and no way limiting scope of the invention. A person skilled in the art will appreciate that many more embodiments of the invention are possible without deviating from the basic concept of the invention any such embodiment will fall under the scope of the invention and is a subject matter of protection.

In the following description light-source is one or more lighting elements mounted on a metal plate where lighting elements are either LED(s) and/or laser diodes and/or quantum dots.

Lighting device defines an assembly of light-source coupled with a motor and both light-source and motor are controlled by a controller.

Figure **1A** depicts a block diagram of one embodiment of the present invention. Here, block **105** represent semiconductor light-sources for generating light beam. This semiconductor light-source consists of lighting element(s). The lighting element(s) could be LEDs, laser diodes or quantum dots, etc. These lighting elements are provided with a focusing arrangement for focusing the light in a direction and are mounted on a mount. This semiconductor light-source block is coupled with motor **110** for rotating the light beam generated by the light-source. At different rotating speed this light beam simulates a flashing or, a continuous beam of light. The intensity of light of the light-source is substantially high and uniform. Motor **110** and semiconductor light-source **105** are controlled by a controller **115** which controls the function of this lighting device. This controller **115** can be either a microprocessor and/or, a microcontroller and is provided with an option of programming and operating from a remote location. The controller is provided for controlling the functioning of the lighting device.

Figure **1B** depicts another embodiment of the present invention. Here, block **100** represent the lightning device and the controller **115** of the lighting source is connected to the failure indicator **200.** This indicator **200,** is provided with audio/visual indicators and/or, radio or, telecom equipment using land and/or, air and/or, satellite links such as may be required to indicate failure by generating alarm(s) in the system and display panel to indicate various operational parameters like temperature, current through light source, motor failure and other important parameters.

The controller **115** senses temperature, current through semiconductor flashing device, motor failure, light intensity, the whole assembly being stationary or, rotating and other necessary operating condition of the devices for effective working of the lighting device. Controller is configured to sense functioning of the light-source(s) with the help of current sensor(s). The controller is provided with a detector for detecting partial or, full failure of the light-source and an indicator **200** for indicating failure. In case of failure of any lighting element(s) the controller detects the malfunctioning and distributes current flow in the remaining light source(s) and/or, lighting element(s) to maintain desired intensity of light emitted from the device. In case current flow distribution in remaining lighting element(s) exceed their continuous current rating, the failure of lighting elements is signaled by a light and/or, an alarm at the failure indicator **200** to avoid continuous higher flow of current through the remaining lighting element(s). Speed of motor is also controlled depending on the number of flashes.

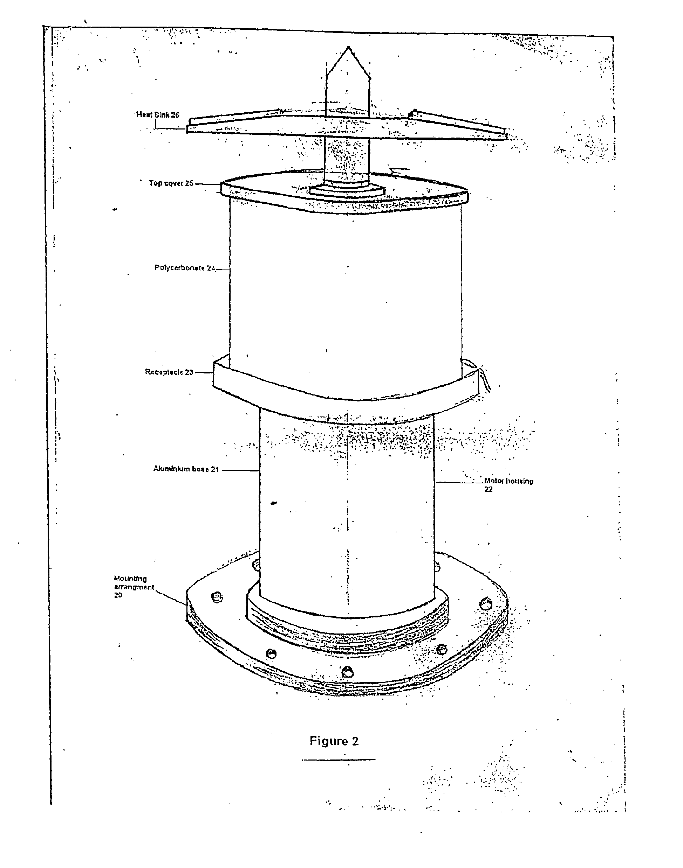

One of the possible working models of product flowing out of the invention is described in figures 2 to 4.

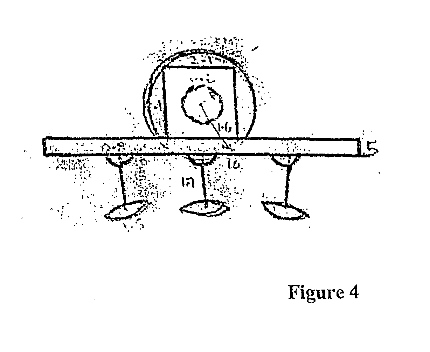

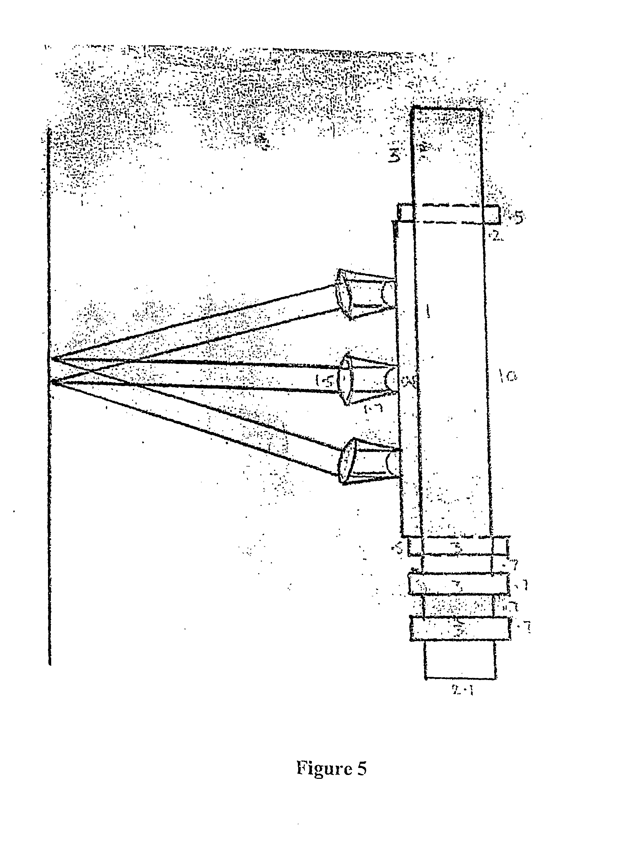

Figure **2** shows an Aluminium base **21** consisting of a mounting arrangement **20** with appropriate holes, a section **22** for housing the motor and a receptacle **23** to hold the transparent polycarbonate cover **24.** The LEDs are mounted on an Aluminium plate as shown in figures 4 & **5** which is mounted on a rotating shaft and is covered with the polycarbonate cover **24.** The top cover **25** consists of Aluminium with appropriate bearings and seals. The polycarbonate cover **24** provides rigidity and water proofing for the rotating shaft along with transparency for the LEDs. The heat sink **26** on the top helps to dissipate the heat traveling to it from the LEDs through the rotating shaft. The rotating LEDs may be powered from a stationary supply using a rotating transformer or a rotating electrical contact as opposed to slip rings, which are subject to wear and tear.

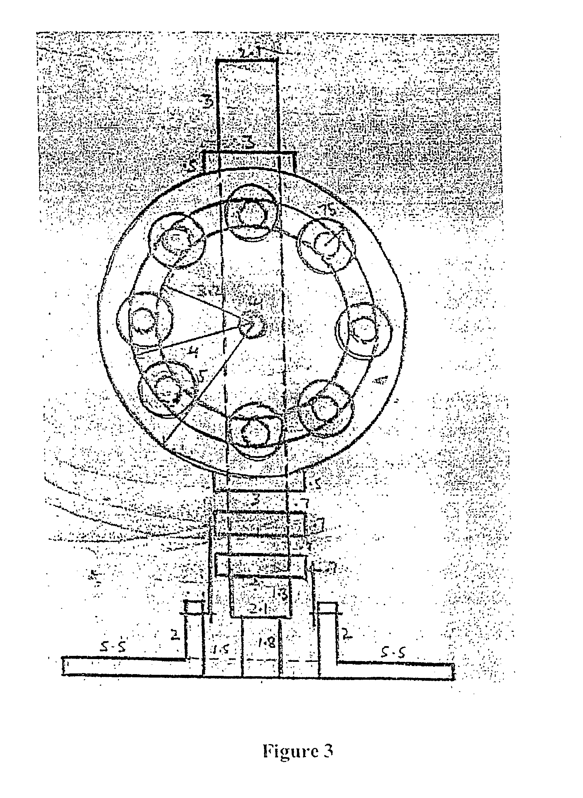

The optical arrangement is depicted in figures 3, 4 & 5, which is described in more detailed in the pending Indian Patent Application number 16/Del/2004. The LEDs are fitted on a plate, which is made to rotate using a motor, and thereby ensuring all-around visibility.

The invention further provides multiple parallel redundant power supplies, option of solar powering the device for the electronics, including for LEDs, and the stepper motor. The LEDs of the light source of the invention is also provided with a controlled current to ensure that heating is reduced and the life of LED is increased.

In case of failure of one or more LEDs, the invention provides provisions for increasing illumination of one or more LEDs, thereby maintaining the intensity. Further, in case of multiple failures, beyond a stage when the current flowing through the LEDs increases beyond their continuous current rating, the electronics used makes the LED flash thereby providing the visual failure indication. The flashing also ensures that the LED life is not reduced because of higher current flow through it.

The rotation of the motor can be varied by the user depending on the number of flashes required per minute, which should be adjustable with a remote. The motor could also vary the angle as is required by the entertainment industry. To drive the motor, to monitor the motor, to switch on power supply and to flash LEDs, various types of controls and alarms are required which are best implemented using a microcontroller. The microcontroller takes care of a situation where a motor may resonate and ensures that the motor is actually rotating at the speed set by the remote and gives an early warning when failure is sensed. There may be some variation in the motor parameters from piece to piece while settings for alarms may also be varied. Such parameters can be changed through remote.

Further, the invention also proposes usage of one or more plates of LEDs according to the frequency of flashing and angles. In addition, a constantly ON light source may also be designed by altering the frequency (by changing motor parameters or providing additional plates) accordingly. Such signals may be mounted at heights of over 100mts where they could be subjected to high winds. It has also been found that the high intensity LEDs generate a certain amount of heat for which they are to be mounted on heat sinks exposed to the atmosphere. Since the lights are installed at heights, weight is also important. Accordingly the weight is drastically reduced in comparison to similar available products. Further the motor and internal circuitry needs a waterproof enclosure. The effect of wind, on the motor may be discounted, when generating alarms. The alarm may also be set off without a wired connection at a distant location.

In some cases it is possible that more than one such light will be installed and synchronized so that the lights are visible in the same direction at the same time. The alarms should be such that the technician is able to identify the light, which is defective by looking at it. The product may also be run from solar power and would have provision for protecting it from lightening.

The light assembly broadly finds application in aviation industry, obstacle beacons, lighthouses and entertainment industry.

Since the lighting device may be fixed in the open, on high rise structures, it may be water and dust proof and may be accompanied with lightening arrestor(s) to protect it from lightening strikes.

It may also be possible to achieve the above benefits by having a stationary light source with a rotating mirror mounted at an angle of say 45 degrees to reflect the light so as to further optimize the power consumption.

## Claims

1. A lighting device comprising:
One ore more semiconductor light-sources (105) for generating a light beam, wherein the semiconductor light-source includes one or more lighting elements, wherein said lighting elements are LED(s) and/or, laser diodes and/or, quantum dots, and wherein said lighting elements are provided with a focusing arrangement for focusing the light in a direction and are mounted on a mount;
at least a motor (110) for rotating said light beam thereby ensuring all-around visibility; **characterized by**
a controller (115) controlling speed of rotation of the motor and intensity of the light-source and monitoring the operating conditions, the light-source(s) of the lighting device are switched ON using a light dependent sensor, the controller is provided with a current sensor, the current sensor monitors current through the light-source and helps in detecting partial and/or, full failure of the light-source/lighting elements,
wherein said controller is provided with options to program the controller from a remote location for controlling the motor and the light source.

2. A lighting device as claimed in claim 1, wherein said light beam is rotated using a reflector.

3. A lighting device as claimed in claim 1, wherein said light beam is rotated using at least any one of a stationary light-source, a rotating reflector, a stationary reflector, rotating light-source, and any combination thereof.

4. A lighting device as claimed in claim 1, wherein the mount includes metal plates for sinking heat.

5. A lighting device as claimed in claim 1, wherein said controller is controlling speed of rotation of the motor, intensity of the light-source(s), monitoring the operating conditions, detecting failures of the lighting device and any of its components and setting off alarms, the alarm includes audio, visual, radio, telecom equipment using land, air and satellite links.

6. A lighting device as claimed in claim 1, wherein the controller is coupled to the light-source through a semi-conductor switch.

7. A lighting device as claimed in claim 1, wherein the lighting device is powered by any one of non-conventional and conventional power supply.

8. A lighting device as claimed in claim 1, wherein said conventional power supply includes any one of an AC to DC power supply and DC to DC power supply.

9. A lighting device as claimed in claim 1, wherein said light source is switched ON by using at least any one of a light dependent sensor or a timer.

10. A lighting device as claimed in claim 1, wherein said lighting device is water and dust proof and protected with lightening arrestors.

## Patentansprüche

1. Eine Beleuchtungsvorrichtung umfassend:
Eine oder mehrere Halbleiter-Lichtquellen (105) zur Erzeugung eines Lichtstrahles, worin die Halbleiter-Lichtquelle ein oder mehrere Leuchtelemente beinhaltet, worin die besagten Leuchtelemente LED(s) und/oder Laserdioden und/oder Quantenpunkte sind, und worin besagte Leuchtelemente mit einer fokussierenden Anordnung für das Fokussieren des Lichtes in eine Richtung ausgestattet sind und auf einem Gestell befestigt sind;
mindestens einen Motor (110) für das Rotieren des besagten Lichtstrahles, wodurch eine Rundum-Sichtbarkeit gesichert ist;
charakterisiert durch
eine Regelung (115), welche die Geschwindigkeit der Rotation des Motors und die Intensität der Lichtquelle kontrolliert und die Betriebsbedingungen überwacht, die Lichtquelle(n) der Beleuchtungsvorrichtung unter Verwendung eines lichtabhängigen Sensors angeschaltet werden, die Regelung mit einem Stromsensor ausgestattet ist, wobei der Stromsensor den Strom durch die Lichtquelle überwacht und hilft, ein teilweises und/oder vollständiges Versagen der Lichtquelle/Leuchtelemente zu detektieren,
wobei die besagte Regelung mit Optionen ausgestattet ist, um die Regelung zur Kontrolle des Motors und der Lichtquelle von einem entfernten Ort zu programmieren.

2. Eine Beleuchtungsvorrichtung wie in Anspruch 1 beansprucht, worin der besagte Lichtstrahl unter Verwendung eines Reflektors gedreht wird.

3. Eine Beleuchtungsvorrichtung wie in Anspruch 1 beansprucht, worin der besagte Lichtstrahl unter Verwendung von mindestens einem von einer stationären Lichtquelle, einem rotierenden Reflektor, einem stationären Reflektor, einer rotierenden Lichtquelle, und einer beliebigen Kombination hiervon rotiert wird.

4. Eine Beleuchtungsvorrichtung wie in Anspruch 1 beansprucht, worin das Gestell Metallplatten für die Ableitung von Wärme beinhaltet.

5. Eine Beleuchtungsvorrichtung wie in Anspruch 1 beansprucht, worin die besagte Regelung die Geschwindigkeit der Rotation des Motors, die Intensität der Lichtquelle(n) kontrolliert, die Betriebsbedingungen überwacht, das Versagen der Beleuchtungsvorrichtung und von irgendeinem ihrer Bestandteile detektiert und Alarme auslöst, wobei der Alarm Audio-, visuelle, Radio-, Telekommunikationsausrüstung unter Verwendung von Land-, Luft- und Satellitenverbindungen beinhaltet.

6. Eine Beleuchtungsvorrichtung wie in Anspruch 1 beansprucht, worin die Regelung über einen Halbleiterschalter mit der Lichtquelle gekoppelt ist.

7. Eine Beleuchtungsvorrichtung wie in Anspruch 1 beansprucht, worin die Beleuchtungsvorrichtung mittels irgendeiner nichtüblichen und üblichen Spannungsversorgung betrieben wird.

8. Eine Beleuchtungsvorrichtung wie in Anspruch 1 beansprucht, worin die besagte herkömmliche Spannungsversorgung irgendeine von AC zu DC-Spannungsversorgung und DC zu DC-Spannungsversorgung beinhaltet.

9. Eine Beleuchtungsvorrichtung wie in Anspruch 1 beansprucht, worin die besagte Lichtquelle unter Verwendung von mindestens einem lichtabhängigen Sensor oder Timer angeschaltet wird.

10. Eine Beleuchtungsvorrichtung wie in Anspruch 1 beansprucht, worin die besagte Beleuchtungsvorrichtung wasserfest und staubfest ist und mit Blitzableitern geschützt ist.

## Revendications

1. Un dispositif d'éclairage comprenant :
une ou plusieurs sources lumineuses à semi-conducteur (105) pour engendrer un faisceau lumineux, dans lequel la source lumineuse à semi-conducteur comprend un ou
plusieurs éléments d'éclairage, dans lequel lesdits éléments d'éclairage sont des diodes électroluminescentes (LEDs), et/ou des diodes laser, et/ou des points quantiques, et dans lequel lesdits éléments d'éclairage sont munis d'un dispositif de focalisation pour focaliser la lumière dans une direction et sont montés sur un support;
au moins un moteur (110) pour faire tourner ledit faisceau lumineux assurant ainsi une visibilité panoramique; **caractérisé par**
un régulateur (115) contrôlant la vitesse de rotation du moteur et l'intensité de la source lumineuse et surveillant les conditions de fonctionnement, la ou les sources lumineuses du dispositif d'éclairage sont allumées grâce à un capteur dépendant de la lumière, le régulateur est muni d'un capteur de courant, le capteur de courant surveille le courant à travers la source lumineuse et permet de détecter une défaillance partielle ou totale de la source lumineuse/des éléments lumineux,
dans lequel ledit régulateur est équipé d'options pour programmer le régulateur à distance au niveau du contrôle du moteur et de la source lumineuse.

2. Un dispositif d'éclairage selon la revendication 1, dans lequel ledit faisceau lumineux est mis en rotation au moyen d'un réflecteur.

3. Un dispositif d'éclairage selon la revendication 1, dans lequel ledit faisceau lumineux est mis en rotation en utilisant au moins une quelconque des sources lumineuses fixes, un réflecteur rotatif, un réflecteur fixe, une source lumineuse rotative, et une quelconque combinaison de ce qui précède.

4. Un dispositif d'éclairage selon la revendication 1, dans lequel le support comporte des plaques métalliques destinées à dissiper la chaleur.

5. Un dispositif d'éclairage selon la revendication 1, dans lequel ledit régulateur contrôle la vitesse de rotation du moteur et l'intensité de la ou des sources lumineuses, surveille les conditions de fonctionnement, détecte les défaillances du dispositif d'éclairage et de chacun de ses composants et déclenche des alarmes, l'alarme incluant du matériel audio, visuel, radio et de télécommunication utilisant des liaisons terrestres, aériennes et satellites.

6. Un dispositif d'éclairage selon la revendication 1, dans lequel le régulateur est couplé à la source lumineuse par l'intermédiaire d'un commutateur à semi-conducteur.

7. Un dispositif d'éclairage selon la revendication 1, dans lequel le dispositif d'éclairage est alimenté par un quelconque système d'alimentation conventionnel ou non conventionnel.

8. Un dispositif d'éclairage selon la revendication 1, dans lequel ledit système d'alimentation électrique conventionnel inclut toute alimentation C.A./C.C. ou C.C. /C.C.

9. Un dispositif d'éclairage selon la revendication 1, dans lequel ladite source lumineuse est allumée en utilisant au moins un quelconque capteur dépendant de la lumière ou un interrupteur à minuterie.

10. Un dispositif d'éclairage selon la revendication 1, dans lequel le dispositif d'éclairage est étanche à l'eau et à la poussière et protégé par des parafoudres.
